# EUROPEAN PATENT SPECIFICATION

(11) **EP 0 713 462 B1**
(45) Date of publication and mention of the grant of the patent: **10.05.2000**
(21) Application number: 95920177.3
(22) Date of filing: 02.06.1995
(51) Int. Cl.: B62K 15/00, B62K 25/04

(54) **ARTICULATED, FOLDING AND SECTIONAL BICYCLE WITH SPECIAL SUSPENSION SYSTEM**
GELENKIGES, FALTBARES UND TEILBARES FAHRRAD MIT EINEM BESONDEREN FEDERUNGSSYSTEM
BICYCLETTE ARTICULEE, PLIABLE ET DEMONTABLE POURVUE D'UN SYSTEME DE SUSPENSION SPECIAL

(30) Priority: 06.06.1994 GR 94100271
(43) Date of publication of application: 29.05.1996
(73) Proprietor: Michail, George, 151 25 Paradissos Amaroussiou (GR)
(72) Inventor: Michail, George, 151 25 Paradissos Amaroussiou (GR)
(74) Representative: Argyriadis, Korinna
(86) International application number: PCT/GR95/00011
(87) International publication number: WO 95/33646

(56) References cited:
- DE-A- 2 038 816
- US-A- 4 669 747
- US-A- 4 925 203
- US-A- 5 149 119

## Description

The invention concerns a bicycle the frame of which consists of two independent sections (1) and (2) which are articulated with each other by means of a joint (S) the axis of which is parallel with respect to the axes of the wheels so that the section (1) of the frame has the ability to rotate with respect to the section (2) of the frame and vice versa.

The section (1) of the frame includes, basically, the front wheel, the handle bar and the seat.
The section (2) of the frame includes, basically, the rear wheel and the axis with the cogged wheel, the pedals and the transmission chain.
The joint (S), which is designed in the form of the front axis of a race bicycle, allows the easy disassembling of the system (1) and (2).
The section (1) and (2) are suspended from each other by means of a wire rope (3).
The wire rope can't reach a state of full expansion because the spiral spring (4) acts upon it - the tension of this spring keeps the wire rope (3) bent.
Thus, the above system plays the role of the elastic element which is interposed in between the two sections (1) and (2) which are suspended from each other.

Articulated, sectional and folding bicycles, and with suspension at the front and at the rear wheel, have appeared in the market from time to time. These bicycles, however, are of a completely different form.

The bicycle disclosed in US-A-4669747 (Groendal) bears a kind of flexible connection comprising a front to rear fiberglass spring plate, a steel cable and compression springs engaging the ends of the cable to maintain the cable in adjusted tension for controlling flexing of the elongated fiberglass spring plate.
The bicycle disclosed in US-A-5149119 (Hwang) comprises an articulated suspension such as a simple compressed spring, a feature commonly used in modern bicycles.
However, the combination of the sectional/folding feature with the special suspension (antishock) appears in the market for the first time. The present invention as defined in claim 1 refers to a new form of bicycle comprising two completely independent sections, which are connected by an articulated joint and are suspended interactively by means of a wire rope. This wire rope is prevented from aligning and reaching a condition of full intensity by elastic means that functions subject to traction.
Mainly, because it is the first time that the ability of the bicycle to be folding and sectional becomes also the reason for which it is one with a suspension, by means of an original elastic system (combination of a wire rope and a spring or other elastic means).

The bicycle of this type :
a) Can be folded, with the sections )1) and (2) rotating round the joint (S),so that it becomes smaller in dimensions and, by consequence, it can be placed in the trunk of the car or into a bag or suitcase, in order that it is transported, and
b) It is possible that the section (1) is separated from the section (2) -by way of disassembling the articulated coupling (S) of the joint- in order that they are placed side by side so as to occupy a very small space, and to reassemble the bicycle when it has to be used.
On the other hadn, the characteristic special suspension system (Antishock), which connects the sections (1) and (2) with each other, provides the bicycle with the ability to absorb the bumps due to the irregularities of the ground whereas, at the same time, when the travel of the suspension reaches its end the shock is eliminated due to the special geometry which is created by the combination of the wire rope and the sping -which spring may be a simple spiral spring (since it functions by being subjected to traction and not to compression).

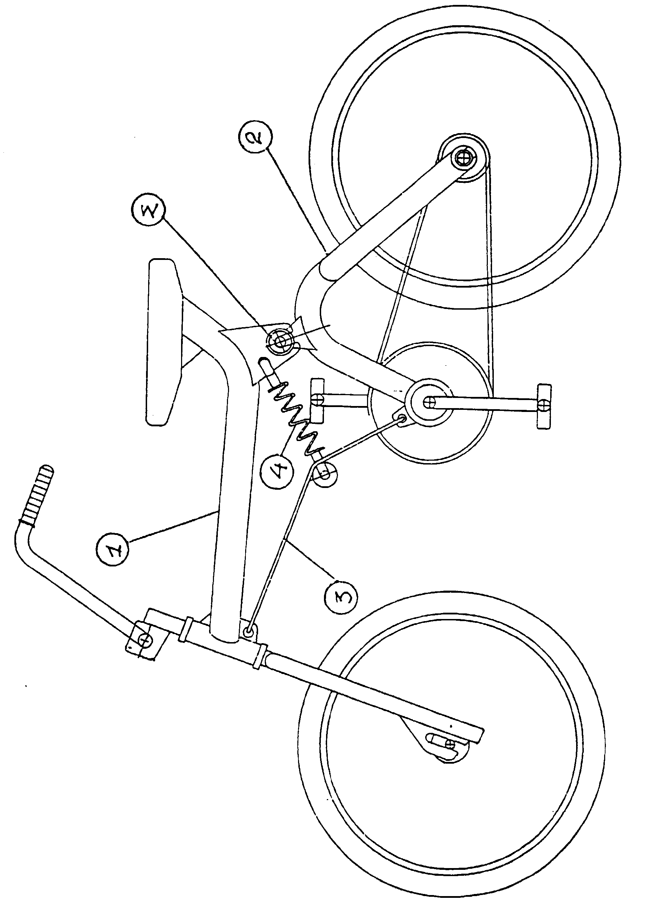

## Claims

1. Articulated folding and sectional bicycle with special suspension system consisting of two independent sections of the frame, the front section (1) which includes, basically, the front wheel, the handle bar and the seat and the rear section (2) which includes, basically, the rear wheel, the pedal system, a cogged wheel and the transmission system, which sections are articulated wich each other by means of a joint (S) including the axis with the two bearings, the axis of which is parallel with respect to the axes of the wheels so that the front section (1) of the frame has the ability to rotate with respect to the rear section (2) of the frame and vice versa, wherein the front section (1) and the rear section (2) are suspended from each other by means of a wire rope (3), which is prevented from reaching a state of full expansion because the spiral spring (4) acts upon it and the tension of this spring keeps the wire rope (3) bent, wherein the combination of the wire rope (3) and the spiral spring (4) forms the suspension (antishock) of special geometry that is able to absorb the shock at the end of its travel.

2. Articulated, folding and sectional bicycle according to claim 1 characterised in that the wire rope (3) can be manufactured of any material.

3. Articulated, folding and sectional bicycle according to claim 1 characterized in that the spiral spring (4) can be any other elastic means.

## Patentansprüche

1. Ein gelenkiges, faltbares und teilbares Fahrrad mit einem besonderen Federungssystem bestehend aus zwei unabhängigen Teilen des Rahmens, dem Frontteil (1), der hauptsächlich aus dem Vorderrad, dem Lenkrad und dem Sitz besteht, und dem hinteren Teil (2), der hauptsächlich aus dem Hinterrad, dem Pedalsystem, einem Zahnrad und dem Transmissionssystem besteht, welche Teile zueinander gelenkig verbunden sind durch ein Gelenk (S) einschließlich der Achse und der zwei Kugellager, die Achse die parallel zu den Achsen der Räder ist, so daß der Frontteil (1) des Rahmens in der Lage ist, in Bezug zum hinteren Teil (2) zu rotieren und umgekehrt, wobei der Frontteil (1) und der hintere Teil (2) getrennt von einander federnd eingehängt sind mittels eines Drahtseils (3), welches daran gehindert wird eine volle Expansion zu erreichen, weil die Spiralfeder (4) auf dieses einwirkt und die Spannung dieser Feder das Drahtseil (3) gebogen hält, wobei die Kombination des Drahtseils (3) und der Spiralfeder (4) die federnde Aufhängung (antischock) von besonderer Geometrie bildet, die in der Lage ist den Stoß am Ende seiner Übertragung zu absorbieren.

2. Ein gelenkiges, faltbares und teilbares Fahrrad gemäß Anspruch 1 dadurch charakterisiert, daß das Drahtseil (3) aus jedem Material hergestellt werden kann.

3. Ein gelenkiges, faltbares und teilbares Fahrrad gemäß Anspruch 1 dadurch charakterisiert, daß die Spiralfeder (4) jedes andere elastische Mittel sein kann.

## Revendications

1. Bicyclette articulée, pliable et demontable pourvue d'un système de suspension spécial, qui se consiste en deux parties indépendantes du cadre: la partie avant (1) qui comprend essentiellement la roue avant, le guidon et la selle et la partie arrière (2) qui comprend essentiellement la roue arrière, le système de pédales, une roue dentée et le système de transmission; ces parties sont articulées au moyen d' un joint (S) qui comprend l' axe avec les deux roulements, dont l'axe est parallèle aux axes des roues, de sorte que la partie avant (1) du cadre puisse tourner relativement à la partie arrière (2) du cadre et vice versa; où la partie avant (1) et la partie arrière (2) sont suspendues l' une de l' autre au moyen d' un câble métallique (3), qui ne peut pas arriver à l' état d' expansion complète parce que le ressort en spirale (4) agit sur ce câble métallique et la tension de ce ressort maintient le câble métallique (3) courbé; où la combinaison du câble métallique (3) et du ressort en spirale (4) forme la suspension (anti-choc) de la géomètrie spéciale qui peut absorber le choc à la fin de la course.

2. Bicyclette articulée, pliable et demontable, suivant la revendication 1, caracterisé par le fait que le câble métallique (2) peut être fabriqué de quelconque matériau.

3. Bicyclette articuleé, pliable et demontable, suivant la revendication 1, caracterisé par le fait que le ressort en spirale (2) peut être quelconque autre moyen élastique.
